# EUROPÄISCHE PATENTSCHRIFT

(11) **EP 1 956 275 B1**
(45) Veröffentlichungstag und Bekanntmachung des Hinweises auf die Patenterteilung: **28.04.2010**
(21) Anmeldenummer: 08101501.8
(22) Anmeldetag: 12.02.2008
(51) Int. Cl.: F16J 15/32, G01M 13/00

(54) **Elektrische Einrichtung zur Erkennung des Verschleißzustandes eines dynamischen Dichtelementes**
Electric device for recognising the wear status of a dynamic sealing element
Dispositif électrique destiné à la reconnaissance de l'état d'usure d'un élément d'étanchéité dynamique

(30) Priorität: 12.02.2007 DE 102007007405
(43) Veröffentlichungstag der Anmeldung: 13.08.2008
(73) Patentinhaber: Robert Bosch GmbH, 70469 Stuttgart (DE)
(72) Erfinder: Meyer, Ernst-August, 30974 Wennigsen (DE)
(74) Vertreter: Kietzmann, Lutz

(56) Entgegenhaltungen:
- DE-A1- 10 222 890
- DE-A1-102006 001 131
- GB-A- 2 401 409
- JP-A- 52 031 263
- US-B1- 6 615 639

## Beschreibung

Die vorliegende Erfindung betrifft eine Dichtungsanordnung mit einer elektrischen Einrichtung zur Erkennung des Verschleißzustandes eines dynamischen Dichtelementes, das an einem elektrisch leitfähigen Trägerkörper angebracht ist und das gegenüber einem relativ hierzu bewegbaren ebenfalls elektrisch leitfähigen Gegenkörper dynamisch dichtet. Weiterhin betrifft die Erfindung auch pneumatische Komponenten, wie Pneumatikzylinder oder Pneumatikventile, die mit einem solchen dynamischen Dichtelement ausgestattet sind.

Das Anwendungsgebiet der Erfindung erstreckt sich vornehmlich auf Komponenten pneumatischer Systeme, wie Pneumatikzylinder oder Pneumatikventile. Derartige Komponenten beinhalten relativ zueinander bewegbare Bauteile, wie beispielsweise Kolben-Zylinder-Anordnungen, welche gegeneinander dynamisch abzudichten sind, um einen ungewollten Leckagestrom des Druckmittels zu verhindern. Zu diesem Zwecke werden in den hier interessierenden Komponenten der pneumatischen Systeme gewöhnlich Dichtungen aus Elastomermaterialien eingesetzt, die meistens nach Art eines O-Rings oder eines Lippendichtrings gestaltet sind. Diese dynamischen Dichtelemente unterliegen im Laufe der Betriebszeit einem fortschreitenden Verschleiß aufgrund von Abrieb, Materialeigenschaftsänderungen und dergleichen. Aus der DE 102 22 890 A1 geht eine elektrische Einrichtung hervor, welche zur Erkennung des aktuellen Verschleißzustandes einer pneumatischen Komponente, hier eines Mehrwegeventils, dient. Da der Verschleißzustand der verschiedenen innenliegenden

Dichtelemente den Verschleißzustand des gesamten Mehrwegeventils kennzeichnen, ermittelt die hier offenbarte elektrische Einrichtung letztlich den Verschleißzustand der Dichtelemente in Summe. Zu diesem Zwecke wird eingangsseitig einer Elektronikeinheit das elektrische Ansteuersignal selbst und ein auf einen Handsteuerpuls folgendes elektrisches Reaktionssignal zugeführt, woraus die Elektronikeinheit durch Vergleich den zeitlichen Abstand zwischen dem Ansteuersignal und dem Reaktionssignal ermittelt, um hieraus die Schaltverzögerung als Maß des Verschleißzustandes zu bestimmen.

Nachteilig bei dieser technischen Lösung ist, dass die Auswertung keinen Rückschluss auf das konkrete Bauelement, hier Dichtelement, zulässt, welches letztlich einen kritischen Verschleißzustand herbeigeführt hat. Es ist lediglich möglich, den Verschleißzustand des Mehrwegeventils insgesamt festzustellen, um dieses erforderlichenfalls auszutauschen.

Aus der DE 10 2006 001 131 A1 geht eine elektrische Einrichtung zur Erkennung des Verschleißzustandes eines dynamischen Dichtelements hervor, wobei im verschleißrelevanten Bereich der Dichtung eine Sensoranordnung eingebettet ist. Diese Sensoranordnung kann vorzugsweise aus Dehnungsmessstreifen bestehen, um Zug- und Druckbeanspruchung der dynamischen Dichtung zu ermitteln. Ebenfalls im Dichtelement direkt integriert ist eine autonome elektronische Auswerteeinheit, welche aus den so erfassten Beanspruchungsmesswerten Rückschlüsse auf den Verschleißzustand des Dichtelementes zieht. Nachteilig bei dieser technischen Lösung ist deren recht aufwendiger technischer Aufbau, der durch die erforderliche Mikroelektronik sowie deren Integration in das Dichtelement bestimmt ist.

Aus der US 6,615,639 geht ein vergleichsweise einfachere technische Lösung hervor, bei welcher ein seitens des Dichtelementes eingebetteter Drahtring verwendet wird, der einen Kontaktdraht gegenüber dem relativ hierzu bewegbaren Gegenkörper bildet. Bei Kontaktierung des ringförmigen Kontaktdrahts mit dem elektrisch leitfähigen Gegenkörper wird ein Verschleißwarnsignal ausgegeben.

Ein anderes Beispiel ist im Dokument GB-A-2 401 409 offenbart.

Es ist die Aufgabe der vorliegenden Erfindung eine Dichtungsanordnung mit einem dynamischen Dichtelement und einer elektrischen Einrichtung zur Erkennung des Verschleißzustandes zu schaffen, welche auf einfache Weise einen direkten Rückschluss über den Verschleiß des Dichtelements zulässt.

Die Aufgabe wird ausgehend von einer Dichtungsanordnung gemäß dem Oberbegriff von Anspruch 1 in Verbindung mit den kennzeichnenden Merkmalen gelöst. Die nachfolgenden abhängigen Ansprüche geben vorteilhafte Weiterbildungen der Erfindung wieder. Hinsichtlich spezieller pneumatischer Komponenten, wie Pneumatikzylinder oder Pneumatikventil, wird die Aufgabe durch die Ansprüche 9 bzw. 10 gelöst.

Die Erfindung schließt die technische Lehre ein, dass das Dichtelement aus einem in Kontakt mit seinem Trägerkörper stehenden elektrisch leitfähigen ersten Dichtmaterial besteht, an dem ein elektrisch nicht leitendes zweites Dichtmaterial angeformt ist, das in dichtenden Kontakt mit dem elektrisch leitenden Gegenkörper kommt, um bei Abrieb des zweiten Dichtmaterials einen Stromkreis zur Anzeige der Verschleißgrenze des dynamischen Dichtelementes zu schließen.

Der Vorteil der erfindungsgemäßen Lösung liegt insbesondere darin, das rechtzeitig vor Ausfall einer pneumatischen Komponente aufgrund der Kenntnis über den aktuellen Verschleißzustand rechtzeitig eine Wartung oder Reparatur durchführbar ist. Somit wird einem Totalausfall der pneumatischen Komponente, welche zum Stillstand eines gesamten pneumatischen Systems führen würde zuvor gekommen und Ausfallzeiten sind vermeidbar. Denn die erfindungsgemäße Lösung gestattet eine tatsächliche Verschleißerkennung und Signalisierung, und zwar durch entsprechende Analyse des verschleißbehafteten Bauelementes selbst, also nicht indirekt, wie beim eingangs diskutierten Stand der Technik. Die hiermit realisierbare bedarfsgerechte Wartung in Abhängigkeit des wirklich eingetretenen Verschleißes macht auch prophylaktische Wartungszyklen entbehrlich, so dass eigentlich noch funktionsfähige pneumatische Komponenten länger in Betrieb bleiben können.

Vorzugsweise ist das erste Dichtmaterial durch Spritzgießen am zweiten Dichtmaterial angeformt. Durch diese fertigungstechnische Maßnahme lässt sich das erfindungsgemäße Dichtelement in einfacher Weise in einer einzigen Spritzgussform herstellen.

Zur Verbesserung der elektrischen Leitfähigkeit können zusätzlich elektrisch leitfähige Einlagen, wie beispielsweise ein Metallblech oder Metallfäden in das elektrisch leitende erste Dichtmaterial eingefügt werden.

Vorzugsweise wird als elektrisch leitendes erstes Dichtmaterial ein mit z.B. Graphit oder Aluminiumpulver gefülltes NBR (Nitril-Butadien-Kautschuk) gewählt, wogegen das elektrisch nicht-leitende zweite Dichtmaterial beispielsweise Polyurethan oder NBR sein kann. Als zweites Dichtmaterial eignen sich prinzipiell Elastomerwerkstoffe, welche bei sehr guten Isolationseigenschaften gleichzeitig eine hohe dynamische Dichtwirkung bei geringer Verschleißneigung sicherstellen.

Das erfindungsgemäße Dichtelement lässt sich vorzugsweise als ein Lippendichtring ausbilden, deren oberer Bereich der Dichtlippe aus dem zweiten nicht-leitenden Dichtmaterial besteht.

Das erfindungsgemäße Dichtelement mit einer elektrischen Einrichtung zur Erkennung des Verschleißes des Dichtelements lässt sich vorteilhafterweise bei einem Pneumatikzylinder einsetzen, wobei der Kolben des Pneumatikzylinders dem Trägerkörper entspricht und das Zylinderrohr des Pneumatikzylinders dem Gegenkörper entspricht, an welchem das dynamische Dichtelement zur Anlage kommt. Vorraussetzung hierbei ist, dass der aus Metall bestehende Gegenkörper elektrisch leitend ist, beispielsweise ein Leichtmetall-Strangpressprofil ist.

Das erfindungsgemäße Dichtelement mit einer elektrischen Einrichtung zur Erkennung des Verschleißes des Dichtelements lässt sich beispielsweise ebenfalls anwenden auf Pneumatikventile, wobei das Schaltelement, ein Ventilschieber oder ein Betätigungsstößel eines Ventilsitzes, dem Trägerkörper entspricht, wogegen das Ventilgehäuse dem Gregenkörper entspricht. Im Kontaktbereich des Dichtelementes am Ventilkörper ist dieser metallisch auszuführen oder zumindest mit einer metallischen Einsatzhülse zu versehen, über welche die elektrische Kontaktierung erfolgen kann.

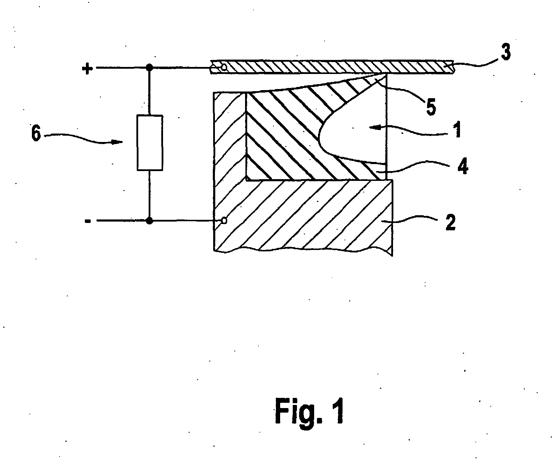

Weitere die Erfindung verbessernde Maßnahmen werden nachstehend gemeinsam mit der Beschreibung eines Ausführungsbeispiels anhand der einzigen Figur näher dargestellt. Die Figur zeigt eine Dichtungsanordnung, umfassend ein dynamisches Dichtelement mit einer elektrischen Einrichtung zur Erkennung des Verschleißzustandes des dynamischen Dichtelementes am Beispiel eines Pneumatikzylinders.

Gemäß Figur ist ein dynamisches Dichtelement 1, welches hier nach Art eines Lippendichtrings ausgebildet an einem elektrisch leitfähigen Trägerkörper 2 angebracht, der in diesem Ausführungsbeispiel einen Kolben des Pneumatikzylinders darstellt. Das Dichtelement 1 dichtet gegenüber einem ebenfalls elektrisch leitfähigen Gegenkörper 3, welcher hier den Zylinder des Pneumatikzylinders darstellt.

Das Dichtelement 1 besteht aus einem in Kontakt mit dem Trägerkörper 2 stehenden elektrisch leitfähigen ersten Dichtmaterial 4, an dem ein elektrisch nicht-leitfähiges zweites Dichtmaterial 5 angeformt ist. Nach Abrieb des nicht-leitenden zweiten Dichtmaterials 5 in Folge der Reibung gegenüber dem elektrisch leitfähigen Gregenkörper 3 kommt das elektrisch leitende Dichtmaterial 4 in Kontakt mit dem elektrisch leitenden Gegenkörper 3, so dass sich ein Stromkreis 6 schließt, was die Verschleißgrenze des dynamischen Dichtelements 1 anzeigt.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche umfasst sind. So ist es beispielsweise auch möglich, die erfindungsgemäße elektrische Einrichtung auch bei anderen pneumatischen Komponenten, wie Mehrwegeventilen, Druckventilen und dergleichen einzusetzen, um eine wirkungsvolle Verschleißanzeige der integrierten dynamischen Dichtelemente und damit der gesamten pneumatischen Komponente zu schaffen.

### Bezugszeichenliste

- 1: dynamisches Dichtelement
- 2: Trägerkörper
- 3: Gegenkörper
- 4: erstes Dichtmaterial (elektrisch leitfähig)
- 5: zweites Dichtmaterial (elektrisch nicht leitend)
- 6: Stromkreis

## Patentansprüche

1. Dichtungsanordnung bestehend aus einem Trägerkörper (2), einem Gegenkörper (3) und einem dynamischen Dichtelement (1) mit einer elektrischen Einrichtung zur Erkennung des Verschleißzustandes des Dichtelements (1), das an dem elektrisch leitfähigen Trägerkörper (2) angebracht ist und gegenüber dem relativ hierzu bewegbaren ebenfalls elektrisch leitfähigen Gegenkörper (3) dynamisch dichtet,
**dadurch gekennzeichnet, dass** das Dichtelement (1) aus einem in Kontakt mit dem Trägerkörper (2) stehenden elektrisch leitfähigen ersten Dichtmaterial (4) besteht, an dem ein elektrisch nicht leitendes zweites Dichtmaterial (5) angebracht ist, das in dichtenden Kontakt mit dem elektrisch leitenden Gegenkörper (3) kommt, um bei Abrieb des zweiten Dichtmaterials (5) einen Stromkreis (6) zur Anzeige der Verschleißgrenze zu schließen.

2. Dichtungsanordnung nach Anspruch 1,
**dadurch gekennzeichnet, dass** das erste Dichtmaterial (4) durch Spritzgießen am zweiten Dichtmaterial (5) direkt angeformt ist.

3. Dichtungsanordnung nach Anspruch 1,
**dadurch gekennzeichnet, dass** der leitfähige Trägerkörper (2) aus einem Metall oder einem nichtleitfähigen Kunststoff mit elektrisch leitfähigen Einlagen besteht, die mit dem ersten Dichtelement (4) in Kontakt kommen.

4. Dichtungsanordnung nach Anspruch 1,
**dadurch gekennzeichnet, dass** das erste Dichtmaterial (4) aus NBR mit Graphitfüllung oder mit Aluminiumpulverfüllung besteht.

5. Dichtungsanordnung nach Anspruch 1,
**dadurch gekennzeichnet, dass** das zweite Dichtmaterial (5) aus NBR oder Polyurethan besteht.

6. bichtungsanordnung nach Anspruch 1,
**dadurch gekennzeichnet, dass** das erste Dichtmaterial (4) mit metallischen Einlagen zur Verstärkung der elektrischen Leitfähigkeit versehen ist.

7. Dichtungsanordnung nach Anspruch 6,
**dadurch gekennzeichnet, dass** die metallischen Einlagen in Form von Metallfäden ausgebildet sind.

8. Dichtungsanordnung nach Anspruch 1,
**dadurch gekennzeichnet, dass** das Dichtelement (1) nach Art eines Lippendichtrings ausgebildet ist, dessen Dichtlippe zumindest teilweise aus dem zweiten Dichtmaterial (5) besteht.

9. Pneumatikzylinder mit einer Dichtungsanordnung nach einem der vorstehenden Ansprüche, wobei der Trägerkörper (2) als Kolben ausgebildet ist und der hiermit in Kontakt kommende Gegenkörper (3) ein Zylindergehäuse ist.

10. Pneumatikventil mit einer Dichtungsanordnung nach einem der vorstehenden Ansprüche 1 bis 8, wobei der Trägerkörper (2) als Schaltelement ausgebildet ist, und dass der hiermit korrespondierende Gegenkörper (3) Bestandteil eines Ventilgehäuses ist.

## Claims

1. A sealing assembly, comprising a carrier body (2), a counterbody (3), and a dynamic sealing element (1) including an electric device for detecting the wear status of the sealing element (1), which is mounted on an electrically conductive carrier body (2) and performs a dynamic sealing function with respect to the also electrically conductive counterbody (3) moveable relative thereto,
**characterised in that** the sealing element (1) is of an electrically conductive sealing material (4), which is in contact with the carrier body (2) and on which an electrically non-conductive second sealing material (5) is applied, which comes into sealing contact with the electrically conductive counterbody (3) so that upon abrasion of the second sealing material (5) an electric circuit (6) is closed to indicate the wear limit.

2. The sealing assembly according to claim 1,
**characterised in that** the first sealing material (4) is directly formed onto the second sealing material (5) by means of injection molding.

3. The sealing assembly according to claim 1,
**characterised in that** the conductive carrier body (2) is of a metal or a non-conductive plastic material with electrically conductive inserts coming into contact with the first sealing element (4).

4. The sealing assembly according to claim 1,
**characterised in that** the first sealing material (4) is of NBR with graphite filling or with aluminium powder filling.

5. The sealing assembly according to claim 1,
**characterised in that** the second sealing material (5) is of NBR or of polyurethane.

6. The sealing assembly according to claim 1,
**characterised in that** the first sealing material (4) is provided with metallic inserts to enhance electric conductivity.

7. The sealing assembly according to claim 6,
**characterised in that** the metallic inserts are in the form of metal strands.

8. The sealing assembly according to claim 1,
**characterised in that** the sealing element (1) is formed in the manner of a lip sealing ring having a sealing lip at least partially consisting of the second sealing material (5).

9. A pneumatic cylinder having a sealing assembly according to any one of the preceding claims, wherein the carrier body (2) is formed as a piston and the counterbody (3) in contact therewith is a cylinder housing.

10. A pneumatic valve having a sealing assembly according to any one of the preceding claims 1 to 8, wherein the carrier body (2) is formed as a switching element, and in that the counterbody (3) corresponding thereto is part of a valve housing.

## Revendications

1. Agencement d'étanchéité constitué d'un corps porteur (2), d'un corps antagoniste (3), et d'un élément d'étanchéité dynamique (1) avec un système électrique pour reconnaître l'état d'usure de l'élément d'étanchéité (1) qui est monté sur le corps porteur (2) électriquement conducteur et assure un étanchement dynamique par rapport au corps antagoniste (3) également électriquement conducteur et mobile par rapport à celui-ci,
**caractérisé en ce que** l'élément d'étanchéité (1) est constitué en un premier matériau d'étanchéité (4) électriquement conducteur qui se trouve en contact avec le corps porteur (2), sur lequel est appliqué un second matériau d'étanchéité (5) électriquement non conducteur, qui vient en contact étanche avec le corps antagoniste (3) électriquement conducteur afin de fermer un circuit électrique (6) pour indiquer la limite d'usure lors de l'usure du second matériau d'étanchéité (5).

2. Agencement d'étanchéité selon la revendication 1,
**caractérisé en ce que** le premier matériau d'étanchéité (4) est conformé directement sur le second matériau d'étanchéité (5) par moulage-injection.

3. Agencement d'étanchéité selon la revendication 1,
**caractérisé en ce que** le corps porteur (2) électriquement conducteur est réalisé en un métal ou en une matière plastique non conductrice avec des inserts électriquement conducteurs, qui viennent en contact avec le premier élément d'étanchéité (4).

4. Agencement d'étanchéité selon la revendication 1,
**caractérisé en ce que** le premier matériau d'étanchéité (4) est un caoutchouc "NBR" avec une charge en graphite ou avec une charge en poudre d'aluminium.

5. Agencement d'étanchéité selon la revendication 1,
**caractérisé en ce que** le second matériau d'étanchéité (5) est un caoutchouc "NBR" ou un polyuréthane.

6. Agencement d'étanchéité selon la revendication 1,
**caractérisé en ce que** le premier matériau d'étanchéité (4) est pourvu d'inserts métalliques pour renforcer la conductivité électrique.

7. Agencement d'étanchéité selon la revendication 6,
**caractérisé en ce que** les inserts métalliques sont réalisés sous la forme de fils métalliques.

8. Agencement d'étanchéité selon la revendication 1,
**caractérisé en ce que** l'élément d'étanchéité (1) est réalisé à la manière d'un anneau d'étanchéité à lèvre, dont la lèvre d'étanchéité est au moins partiellement constituée du second matériau d'étanchéité (5).

9. Cylindres pneumatiques avec un agencement d'étanchéité selon l'une des revendications précédentes, dans lequel le corps porteur (2) est réalisé sous forme d'un piston et le corps antagoniste (3) venant en contact avec celui-ci est un boîtier de cylindre.

10. Valve pneumatique avec un agencement d'étanchéité selon l'une des revendications 1 à 8, dans laquelle le corps porteur (2) est réalisé sous forme d'un élément de commutation, et le corps antagoniste (3) correspondant à celui-ci est une partie constitutive d'un boîtier de valve.
